# EUROPEAN PATENT SPECIFICATION

(11) **EP 2 666 041 B1**
(45) Date of publication and mention of the grant of the patent: **17.06.2015**
(21) Application number: 12702672.2
(22) Date of filing: 17.01.2012
(51) Int. Cl.: G02B 6/255, G02B 6/28

(54) **MULTI-STAGE FIBER PROCESSING SYSTEM AND METHOD**
MEHRSTUFIGES FASERVERARBEITUNGSSYSTEM UND VERFAHREN
SYSTÈME DE TRAITEMENT DE FIBRE À PLUSIEURS ÉTAGES ET PROCÉDÉ

(30) Priority: 19.01.2011 US 201161434060 P
(43) Date of publication of application: 27.11.2013
(73) Proprietor: 3SAE Technologies, Inc., Franklin, TN 37067 (US)
(72) Inventor: WILEY, Robert G., Franklin Tennessee 37067-1795 (US); CLARK, Brett, Whites Creek Tennessee 37189 (US); LOWER, John, Franklin, Tennessee 37064 (US)
(74) Representative: Müller-Boré & Partner Patentanwälte PartG mbB
(86) International application number: PCT/US2012/021559
(87) International publication number: WO 2012/099883

(56) References cited:
- EP-A2- 0 480 453
- JP-A- 2 118 606
- JP-A- 58 091 403
- JP-A- 62 210 410
- US-A- 5 167 685
- US-A1- 2010 135 621
- US-B2- 7 670 065

## Description

### FIELD OF THE INVENTION

The present invention relates to the field of fiber optics, and more particularly to a system and a method for processing optical fibers.

### BACKGROUND

The advancement of the state of the art of fiber laser technology has been quite rapid over the past decade. The increasing availability of efficient, powerful pump laser diodes and the development of pump combiner devices and attendant optical matching components has pushed attainable output power and radiance to previously unseen levels. However, the tools for constructing such devices have not kept pace. Assembly of high-power fiber lasers and their components has remained a skilled craft, requiring lengthy manual processes and delivering low production yields.

Due to the high optical power levels involved, and especially with the development of cladding-pumped designs, the requirements for alignment, cleave quality, cleanliness, and correct splice, taper, and diffusion geometry are more stringent than even the most critical of previous lower-power applications. Cleave angle specifications for 125µm telecom splices typically allow 1° or more of deviation from the perpendicular, compared to a high power splice which might require <0.25° on fibers which are more challenging to cleave. Optical losses of 0.1dB, which might be acceptable for a splice in a telecom erbium-doped fiber amplifier (EDFA), will dissipate over 20W in a kilowatt laser, causing explosive failure of the splice. As well as splicing, the assembly process may require various tapering procedures to create combiners and mode field adapted splices. These tapers must have correct adiabatic core geometry and in some cases a surface free of contaminants, which can cause destructive "hot spots."

In the 1990's, several manufacturers introduced fiber preparation and fusion splicing machines that enabled the high-volume production of EDFA's for the telecom boom. These machines employed varying degrees of fixturing and automation to drastically reduce the time and skill required to make low-loss, high-strength splices. However, by design these tools were limited to relatively small fibers, typically 250µm maximum cladding diameter. Before these developments, hand alignment under optical microscopes and flame heat sources were the means used to splice fibers, just as they often are for the large diameter fibers of today's laser applications.

As fiber lasers begin to move from research and development (R&D) to volume production, there is a need to simplify, improve, and automate the steps required for their assembly, as was done for telecom applications. New cleaving and heat source technologies, implemented in a well designed workstation, comprise a substantial step forward in making high power laser manufacturing a high-yield, repeatable process. Flexible capabilities, including multi-axis positioning, wide field optics, and multi-application control software enable splicing, bundling, tapering, cleaving, and end-cap attachment to be performed on the same machine. However, even with such advancements, there remain limitations due to heat sources typically used in optical fiber processing, which increased automation have not resolved.

US 7 670 065 B2 discloses a multi-electrode system which comprises a fiber support configured to hold at least one optical fiber and a set of electrodes disposed about the at least one optical fiber and configured to generate arcs between adjacent electrodes to generate a substantially uniform heated field to a circumferential outer surface of the at least one optical fiber.

JP 58 091403 A discloses a plurality of electrode heat sources disposed in the axial direction.

JP 62 210410 A discloses providing heat to a welded part of bundled optical fibers in a longitudinal direction, and applying tensile force to weld and draw the welded parts.

### SUMMARY OF INVENTION

Provided are systems and methods using multiple stages of heat sources to generate a substantially uniform heat zone that extends along a fiber or fiber bundle. The stages may be operated in concert, e.g., for tapering or diffusion, or operated independently, e.g., for splicing. That is, only one stage could remain on for a splicing task.

There is provided a multi-stage fiber processing system according to claim 1.

At least one of the 3 electrode heat sources can comprise 3 electrodes in a "Y" configuration.

At least one of the 3 electrode heat sources can comprise 3 electrodes in a "T" configuration.

For each 3 electrode heat source, a first arc can be formed between a first electrode and a second electrode, a second arc can be formed between the second electrode and a third electrode, and a third arc can be formed between the third electrode and the first electrode.

The two 3 electrode heat sources can be disposed in a 7.4*10⁴ to 8.1*10⁴ Pa (22" to 24" Hg) gauge vacuum, 2.6*10⁴ to 2*10⁴ Pa (200 to 150 torr) absolute.

The two 3 electrode heat sources can be disposed in an oxygen-enriched partial vacuum with plasma at a temperature of not more than about 400°C.

Each of the nine arcs can be independently controlled.

The system can be configured to rotate the 3 arcs between the two 3 electrode heat sources in a clockwise direction about an axis of the at least one fiber.

The system can be configured to rotate the 3 arcs between the two 3 electrode heat sources in a counterclockwise direction about the axis of the at least one fiber.

The system can further comprise a different transformer configured to drive each electrode of each of the 3 electrode heat sources.

The system can further comprise a common transformer configured to drive at least one electrode from each of the 3 electrode heat sources.

The heat zone can have a temperature up to about 3000°C.

The heat zone can have a width in a range of 0mm to 10mm.

The heat zone can be about 3mm.

The first fiber holder and second fiber holder can be translatable away from the heat zone.

The heat zone can be a substantially uniform heated plasma field.

The heat zone can be substantially isothermic.

The at least one fiber can be a fiber bundle.

The at least one fiber can be a large diameter fiber of 400µm to 600µm.

The first and second fiber holders can be configured to translate away from each other.

There is provided a method of fiber processing according to claim 13.

The method can further comprise tapering the at least one fiber by selectively translating the first and second fiber holder away from each other.

The method can further comprise cleaving the at least one fiber, and splicing the at least one fiber with only one of the plurality of heat sources.

Each 3 electrode heat source can comprise 3 electrodes in a "Y" configuration.

Each 3 electrode heat source can comprise 3 electrodes in a "T" configuration.

The heat zone can comprise, for each 3 electrode heat source, generating a first arc is formed between a first electrode and a second electrode, generating a second arc is formed between the second electrode and a third electrode, and generating a third arc is formed between the third electrode and the first electrode.

The method can include disposing the two 3 electrode heat sources in a 7.4*10⁴ to 8.1 *10⁴ Pa (22" to 24" Hg) gauge vacuum, 2.6*10⁴ to 2*10⁴ Pa (200 to 150 torr) absolute.

The method can further comprise independently controlling each of the nine arcs.

The method can further comprise rotating the 3 arcs between the two 3 electrode heat sources about an axis of the at least one fiber in a clockwise direction.

The method can further comprise rotating the 3 arcs between the two 3 electrode heat sources about an axis of the at least one fiber in a counterclockwise direction.

The method can further comprise using a different transformer configured to drive each electrode of each of the 3 electrode heat sources.

The method can further comprise using a common transformer configured to drive at least one electrode from each of the 3 electrode heat sources.

The heat zone can have a temperature up to about 3000°C.

The heat zone can have a width in a range of 0mm to 10mm.

The heat zone can be about 3mm.

The method can further comprise translating the first fiber holder and second fiber holder away from the heat zone.

The heat zone can be a substantially uniform heated plasma field.

The at least one fiber can be a large diameter fiber of 400µm to 600µm.

The heat zone can be substantially isothermic.

The at least one fiber can be a fiber bundle.

The at least one fiber can be a large diameter fiber in a range of about 400µm to 600µm.

For each 3 electrode heat source, a first arc can be formed between a first electrode and a second electrode, a second arc can be formed between the second electrode and a third electrode, and a third arc can be formed between the third electrode and the first electrode.

The system can further comprise a different transformer configured to drive each electrode of each of the 3 electrode heat sources.

The system can further comprise a common transformer configured to drive at least one electrode from each of the 3 electrode heat sources.

The system can further comprise at least one stepper motor arranged to translate at least one of the first and second fiber holders.

The at least one fiber can be a fiber bundle.

The at least one fiber can be a large diameter fiber of 400µm to 600µm.

The plurality of heat sources can include two 3 electrode heat sources configured to generate nine arcs, including 3 arcs between the two 3 electrode heat sources.

Each of the nine arcs can be independently controlled.

The system can be configured to rotate the 3 arcs between the two 3 electrode heat sources in a clockwise direction about an axis of the at least one fiber.

The system can be configured to rotate the 3 arcs between the two 3 electrode heat sources in a counterclockwise direction about the axis of the at least one fiber.

### BRIEF DESCRIPTION OF THE DRAWINGS

The drawing figures depict preferred embodiments by way of example, not by way of limitation. In the figures, like reference numerals refer to the same or similar elements.
FIG. 1 is a multi-stage fiber processing system, in accordance with the present invention.
FIG. 2A is a diagram showing an embodiment of a three electrode stage in a "Y" configuration, in accordance with aspects of the present invention.
FIG. 2B is a diagram showing an embodiment of a three electrode stage in a "T" configuration, in accordance with aspects of the present invention.
FIG. 3A is a generally side view of an embodiment of two heat source stages, where each heat source stage is a 3 electrode heat source.
FIG. 3B is a view of the 3 electrode heat source of FIG. 3A, but from a view that is generally along the axis of the fiber.
FIG. 4 is a plot showing a Gaussian thermal profile of the plasma field produced by the multi-stage 3 electrode heat sources in FIGS. 3A and 3B.
FIG. 5 is a graph showing the relative sinusoidal phase of the three electrodes of FIGS. 2A, 2B, 3A and 3B.
FIG. 6 is a graph showing a preferred waveform for the current applied to a set of transformer primaries to achieve the results in FIG. 5.
FIG. 7 is a schematic diagram of an embodiment of a circuit for driving the three electrodes in a 3 electrode heat source, as shown in FIGS. 2A, 2B, 3A and 3B.
FIG. 8 is a schematic diagram of an embodiment of a circuit for driving the two of three electrodes in a 3 electrode heat source, as shown in FIGS. 2A, 2B, 3A and 3B.
FIG. 9 provides a flow chart of an embodiment of a method processing at least one optical fiber, in accordance with aspects of the present invention.

### DETAILED DESCRIPTION OF PREFERRED EMBODIMENT

It will be understood that, although the terms first, second, etc. can be used herein to describe various elements, these elements should not be limited by these terms. These terms are used to distinguish one element from another, but not to imply a required sequence of elements. For example, a first element can be termed a second element, and, similarly, a second element can be termed a first element, without departing from the scope of the present invention. As used herein, the term "and/or" includes any and all combinations of one or more of the associated listed items.

It will be understood that when an element is referred to as being "on" or "connected" or "coupled" to another element, it can be directly on or connected or coupled to the other element or intervening elements can be present. In contrast, when an element is referred to as being "directly on" or "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements, and/or components, but do not preclude the presence or addition of one or more other features, steps, operations, elements, components, and/or groups thereof.

In accordance with aspects of the present invention, provided is a multi-stage fiber processing system configured for providing an extended heat zone along an axis of at least one optical fiber. The extended heat zone may have various utilities, such as, for example, tapering the fiber, where one or both ends of the fiber can be pulled to create a desired taper originating in the extended heat zone. Such multi-stage fiber processing systems can also be useful in other contexts and applications, such as annealing, diffusion, splicing, and ablation.

The extended heat zone delivers a substantially isothermic (or uniform) distribution of heat about the fiber. In a presently preferred embodiment, the extended heat zone is formed using two 3 electrode heat sources, where the gap distances between the electrodes is the same. When properly configured, a total of 9 arcs are created among the six electrodes. Three arcs are generated between the three electrodes of each heat source, which account for six total arcs. And 3 arcs are generated between the two 3 electrode heat sources, which can be controlled to rotate about the fiber, in either of a clockwise or counterclockwise direction. The 9 arcs create a vortex having a substantially isothermic profile.

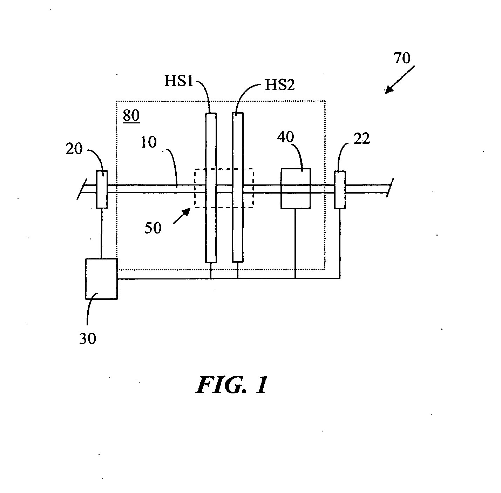

FIG. 1 provides an embodiment of a multi-stage fiber processing system 70, in accordance with aspects of the present invention. Multi-stage fiber processing system 70 is configured to process at least one fiber or fiber bundle 10 (collectively referred to as "fiber 10" herein), and includes at least two heat sources HS1 and HS2. Fiber 10 can be or include large diameter fibers (LDFs) having a diameter in a range of about 400µm to 600 µm, and beyond, as well as smaller diameter fibers. The heat sources HS1 and HS2 combine to provide a heat zone 50 that is extended along an axis of the fiber 10. The heat zone is extended in that it is larger than the heat zone provided by only one heat source. The extended heat zone enables improved fiber processing without the need to create relative movement between a single heat source and the fiber to effectively extend the heat zone.

Fiber 10 may be secured at two points with first and second holding devices 20 and 22. For a tapering configuration both of devices 20 and 22 may be or include a clamp coupled to a translation mechanism, such as a stepper motor. However, in some embodiments, it is possible that only one of holding devices 20 and 22 includes a translation mechanism, while the other device can be a stationary clamp. In yet other embodiments, each of devices 20 and 22 can be stationary clamps, although this would not be particularly useful for tapering.

A controller 30 can be attached to one or both of holding devices 20 and 22 to controller their movement. A monitoring system 40, e.g., a vision system, can be used to monitor changes to fiber 10, e.g., for tapering or diffusion purposes, and provide feedback to controller 30. For example, when tapering, a vision system 40 can be used to ensure the desired taper has been achieved. The heat sources HS1 and HS2 can also be coupled to a controller, so control various aspects thereof. For example, when HS1 and HS2 are multi-electrode heat sources, the control can control the input power to the electrodes, which could be done on an individual electrode basis. The controller could be used to control the direction and intensities of arcs formed between the two (or more) 3 electrode heat sources - or other adjustable parameters of other heat sources. Such devices and controller can be coupled to a workstation or other computer for setting parameters, operator control, program control, and measurement, analysis, and monitoring.

In some embodiments, the heat sources HS1 and HS2 can be disposed in at least a partial vacuum 80. As an example, heat sources HS1 and HS2 can be disposed in a 22" to 24" Hg gauge vacuum, 200 to 150 torr absolute. As another example, heat sources HS1 and HS2 can be disposed in an oxygen-enriched partial vacuum with plasma at a temperature of not more than about 400°C.

In the preferred embodiment, the heat sources HS1 and HS2 include multi-electrode heat sources. Such multi-electrode heat sources can each include at least three electrodes. Three electrode heat sources have proven useful in a variety of fiber optic processing, as developed by 3SAE Technologies, Inc., Franklin, Tennessee, which are also the subject of U. S. Patent Number 7,670,065, entitled Multi-Electrode System, which is referred to as the "Ring of Fire®" and can achieve fiber temperatures from less than 100°C to greater than 3000°C. The actual temperature will be chosen based on fiber 10 and the intended operation, e.g., tapering, diffusion, splicing, annealing, and so on.

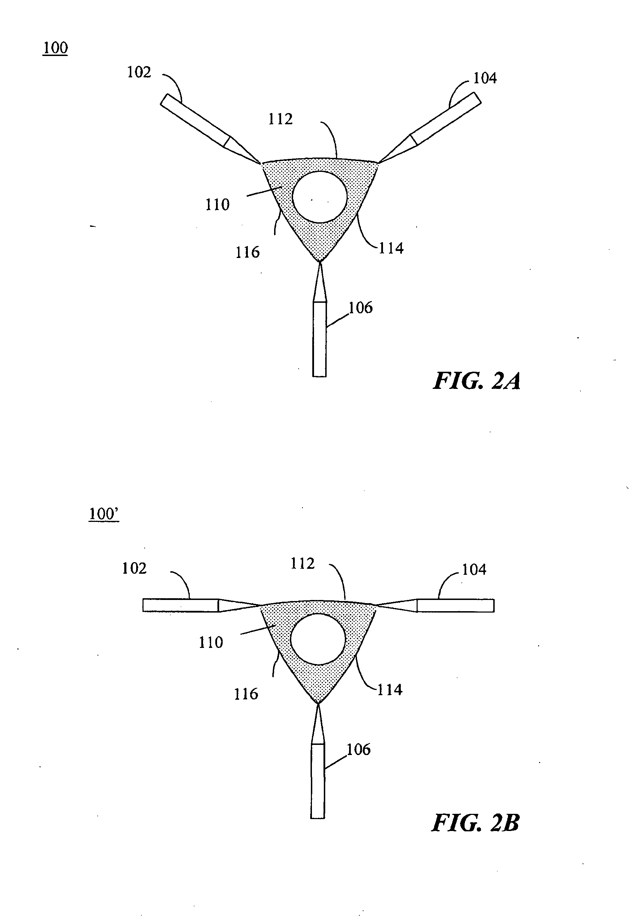

FIG. 2A is a diagram showing an embodiment of a three electrode heat source stage in a "Y" configuration, in accordance with aspects of the present invention. FIG. 2B is a diagram showing an embodiment of a three electrode heat source stage in a "T" configuration, in accordance with aspects of the present invention. In some embodiments, the multi-stage fiber processing system 100 can include two 3 electrode heat source stages, or at least six electrodes, with at least 3 electrodes per stage.

In FIG. 2A, a multi-electrode heat source 100 includes three electrodes 102, 104, and 106 arranged in a "Y" configuration, where an arc is generated between each adjacent pair of electrodes. For example, an arc 112 is generated between electrodes 102 and 104; an arc 114 is generated between electrodes 104 and 106; and an arc 116 is generated between electrodes 106 and 102. The three arcs 112, 114, and 116 create a heated field 50 surrounding the fiber 10. The heated field 50 is preferably a substantially isothermic heated field. In some embodiments, the heated field 50 is a substantially uniform heated plasma field.

In FIG. 2B, a multi-electrode heat source 100' includes three electrodes 102, 104, and 106 arranged in a "T" configuration, where an arc is generated between each adjacent pair of electrodes. For example, as with multi-electrode heat source 100, an arc 112 is generated between electrodes 102 and 104; an arc 114 is generated between electrodes 104 and 106; and an arc 116 is generated between electrodes 106 and 102. The three arcs 112, 114, and 116 create a heated field 110 surrounding the fiber 110. The heated field 110 is preferably a substantially uniform heated field. In some embodiments, the heated field is a substantially uniform heated plasma field.

The heat zone created by a 3 electrode arrangement can be relatively narrow, e.g., 1mm in width (at ½ max). Using multiple stages of 3 electrode heat sources effectively adds a 3^{rd} dimension to the heat zone, creating the extended heat zone or vortex. A wider heat zone has the advantage of reducing variation in the diameter of the tapered zone. The thermal profile of the extended heat zone can be controlled based on the spacing between heat sources and the power delivered to them. The axially narrow heat zone of a single stage of the three-phase "Ring of Fire®," which is shown in FIGS. 2A, and 2B, has advantages for many applications, but a broader heat source benefits applications such as Thermally Expanded Core splicing, post-splice fire polishing, and high ratio tapers. For such applications, the three electrode system can be expanded to a six-electrode configuration. In the six electrode system, there are two heat source stages HS1 and HS2, each with three electrodes.

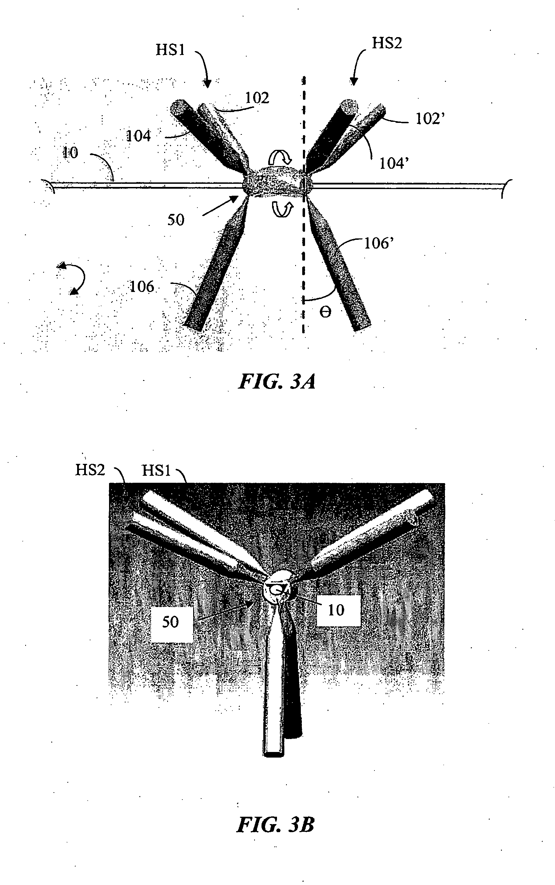

FIG. 3A is a generally side view of an embodiment of two heat source stages HS1 and HS2, where each heat source stage is a 3 electrode heat source. In this embodiment, the 3 electrode heat sources are each in a "Y" configuration, as in FIG. 2A, with 120° between adjacent pairs. In this embodiment, each electrode 102, 104, 106 is pitched or tiled by an angle θ away from the heat zone 50, in a range between about 22.5° and 45° from vertical. In other embodiments, the electrodes 102, 104, 106 need not be tilted, or could be tilted less than 22.5°. While it is presently not envisioned as the best mode of practicing the invention, in still other embodiments, the electrodes 102, 104, 106 could be tilted at an angle greater than 45°.

In the view provided by FIG. 3A, it can be seen that 9 arcs are produced by the six electrodes 102, 102', 104, 104', 106, and 106'. Three arcs are generated between electrodes 102, 104, and 106, and three arcs are generated between electrodes 102', 104', and 106'. Additionally, 3 arcs are created between the two heat sources HS1 and HS2 - to generate heat zone 50 as a substantially isothermic heated field around fiber 10. For the 3 arcs formed between the heat sources, one arc is formed between one electrode in heat source HS1 and one electrode of heat source HS2. As an example, a different arc can be formed between electrode 102 and 104'; electrode 104 and 106', and electrode 106 and 102' - for a total of 3 arcs formed between heat sources HS1 and HS2. The forming of these arcs can be accomplished to create an effect of the arcs (or heated field) rotating clockwise or counterclockwise around fiber 10. This is shown in FIG. 3A.

FIG. 3B is a view of the 3 electrode heat source HS1 and HS2 of FIG. 3A, but from a view that is generally along the axis of the fiber 10. In this view, the fiber would come out of the page. As can be seen, the extended heat zone 50 created by the six electrodes (3 electrodes per heat source stage) surrounds fiber 10.

In the preferred embodiments, the multi-electrode heat source includes a digitally-controlled three-phase high-voltage source driving three tungsten electrodes 102, 104 106. The points of the electrodes form an equilateral triangle, and the resulting plasma discharge forms in a substantially triangular shape about their mutual center and perpendicular to the fiber axis. In the preferred embodiments, the electrode spacing can be varied from 1mm to 3mm or more, depending on the desired transverse width of the heat zone. Closer spacing provides more stability at lower input power. Wider spacing provides even heating of larger fibers. The system can be adjusted from very low power (suitable for splicing of <80µm fibers, as an example) to a maximum of 150W of input power, which will easily splice and taper 2mm fibers and bundles. The effective width of the heat zone along the fiber axis varies with input power, is from ~50µm to ~500µm.

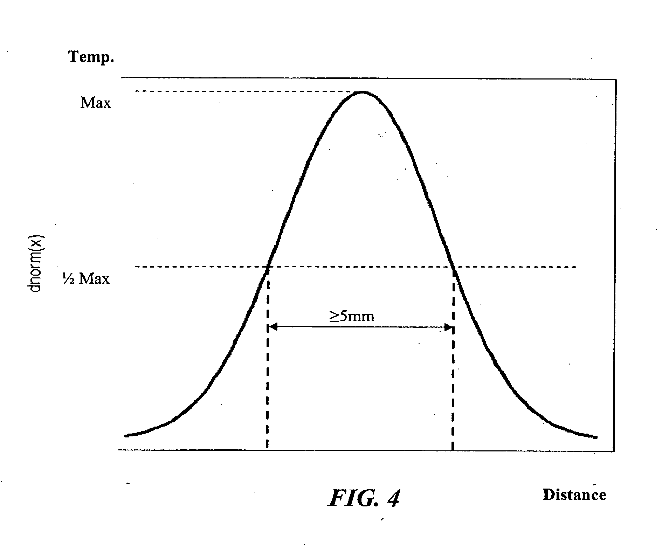

A multiphase drive circuit drives the six electrodes (3 per heat source stage) to form a three-dimensional glow discharge in the form of extend heat zone 50, completely surrounding the fiber 10 for a length of easily up to 0mm to 10mm, as is shown by the Gaussian heat distribution of FIG. 4. The preferred heat zone width may be about 3mm. There is no inherent limitation of the heat zone width, and more than two stages of heat sources could be used to further expand the heat zone. The two triangular sets of three electrodes can be aligned and driven 120° displaced in phase, or rotationally offset by 60° with their tips forming an irregular octahedron. The spacing between the two sets may be adjusted to control the axial extent of the heated plasma vortex. Electronic adjustments to the drive waveforms can significantly alter the heat distribution transferred to the fiber or device. This system can also be operated as one or two independent three-phase planar systems.

With most conventional heat sources, including the "Ring of Fire®", the axial distribution of heat is essentially Gaussian, and the width of the effective heat zone cannot be changed during operation. The six-electrode system opens new possibilities, as the heat distribution is controlled by the relative phase of different features of the drive waveforms, and can be altered asymmetrically and in real time. This will provide more flexible heat application for dissimilar-fiber splices and tapering. As described previously, for a narrow, symmetrical heat source, the geometry of a taper is defined by the motion and acceleration of the two segments of fiber on either side of the molten zone. A heat source with an axial extent of several millimeters and an asymmetrical heat zone can produce tapers defined by temperature distribution rather than acceleration.

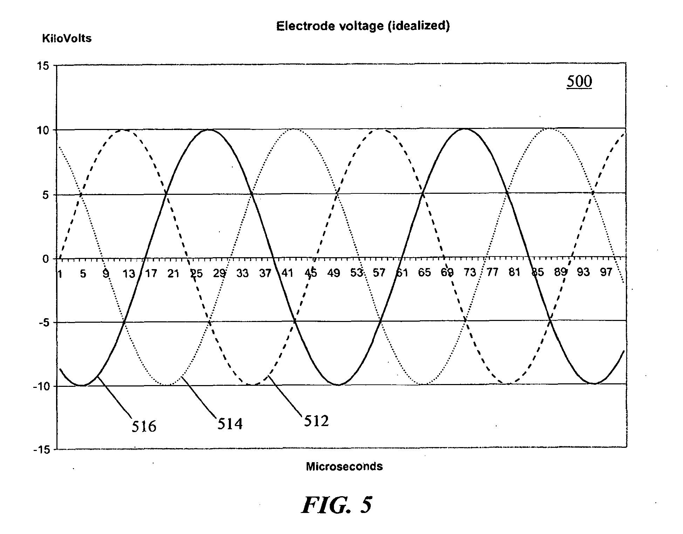

FIGS. 5-8 show waveforms and schematic diagrams that can be used to control a single 3 electrode heat source, as examples. When using two (or more) 3 electrode heat sources to create an extended heat zone, different waveforms and schematics will result, which can be extrapolated from those shown in FIGS. 5-8. FIGS. 5-8 are, therefore, provided as basis for such extrapolation in an exemplary embodiment.

FIG. 5 is a graph 500 that shows an example of voltages which could be provided at the electrodes 102, 104, and 106 to create a three-phase arc, as shown in FIGS. 2A, 3B, 3A and 3B. The example shown has an overall frequency of approximately 22kHz with a peak-to-peak voltage of 20kV. Plot 512 is for electrode 102, plot 514 is for electrode 104, and plot 516 is for electrode 106.

In the example, there is an arc present between electrodes 104 and 106 at time 0µs, see plots 514 and 516. At approximately 6µs, the arc shifts to the space between electrodes 102 and 106, see plots 512 and 516. At 13µs, the arc moves to electrodes 512 and 514, see plots 512 and 514, and so forth. At any given time, an arc should be present between two electrodes with the greatest potential difference between them. The rotating phase sequence takes place so rapidly that the arc appears to be constantly on, and substantially constant heating is provided, as the thermal time constants of the fiber and surrounding air are substantially longer than the oscillation period of the arc.

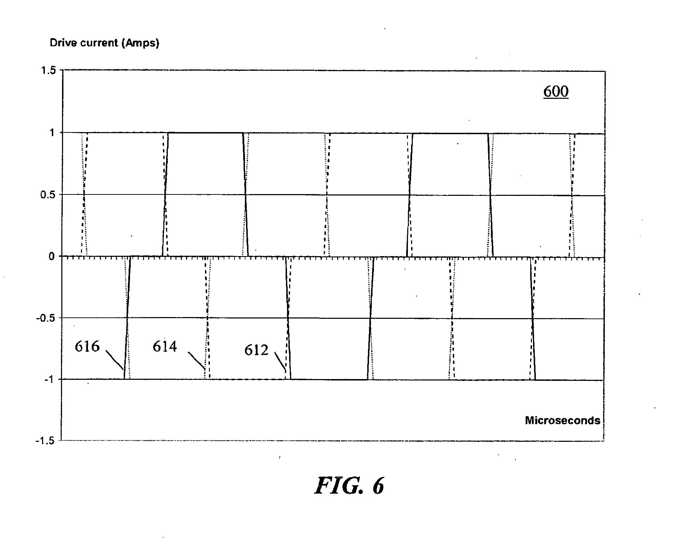

It can be extremely difficult to actually control the voltage at the electrodes. However, a far more practical method of controlling current to the primary of the step-up transformer can be applied in the illustrative embodiment. FIG. 6 shows graph 600 having a preferred waveform for the current applied to the transformer primaries. This system of drive currents will produce output voltage waveforms roughly corresponding to those shown in FIG. 5, producing a controllable three-phase arc.

The primary drive currents for the transformers require three waveforms disposed at 0 degrees phase, 120 degrees phase, and 240 degrees phase. These can be generated by well-known digital or analog means, such as a ring counter. In graph 400, plot 412 is for electrode 102, plot 414 is for electrode 104, and plot 416 is for electrode 106.

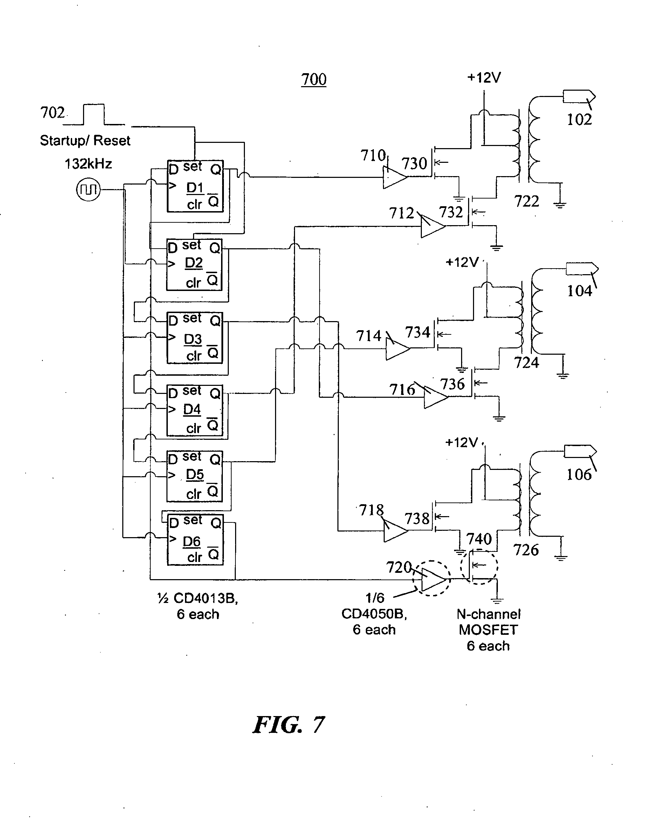

FIG. 7 is schematic diagram of an embodiment of a circuit 700 configured to drive the three electrodes 102, 104, and 106 of FIGS. 2A, 2B, 3A and 3B. Six D-type flip-flops D1-D6 are configured to implement a circular shift register. A short startup pulse 702 is applied to initialize the circuit 700. Initially, electrode 102 is positive and electrode 104 is negative, but then each sequences through the various phase states. As an example, the overall frequency can be 1/6 of the clock frequency of 132KHz in this embodiment. In other embodiments, this can differ, preferably maintaining a substantially uniformly or evenly heated plasma field. Current control circuitry (not shown) can be substituted for the CD4050 buffers 710, 712, 714, 716, 718, and 720.

The required voltages could be generated from three separate 10CT:780 high voltage transformers 722, 724, and 726, or from a tuned LC configuration wound on a single core. It is also possible for the three transformer 722, 724, and 726 secondaries to be connected in a "delta" configuration, wherein the secondary coils are connected between adjacent pairs of electrodes, rather than being referenced to ground as in FIG. 7.

In FIG. 7, MOSFETS 730, 732, 734, 736, 738, and 740 drive transformers 722, 724, and 726. In accordance with various aspects of the invention, the multi-electrode system can include a dead-band feature to increases efficiency and reduce dissipation in the drive transistors/MOSFETs 730, 732, 734, 736, 738, and 740, by preventing overlap in conduction between the "positive-driving" and "negative-driving" devices. The dead-band feature can also provide a mechanism for adjusting arc power (e.g., by varying the width of the dead-band). The dead-band feature can also enable cleaner transitions between states of the arcs, by allowing an existing arc to extinguish momentarily before establishing the next arc in the phase sequence.

The dead-band feature can be implemented by producing the controlled current waveforms to include two dead-bands of 1% to 49% of the period of the cycle, wherein there is substantially no current flow through the transformer primary.

Another embodiment of a three electrode system can generate an arc of substantially the same properties as that of the three electrode system described above with respect to FIGS. 2A, 2B, 3A, and 2B, but with one grounded electrode and only two powered electrodes.

In one embodiment, electrodes 102 and 104 are powered and electrode 106 is grounded. At a particular degree of phase separation (between 0° and 180°) between the voltage waveforms applied to electrodes 102 and 104, with electrode 106 grounded, all three arcs 112, 114, 116 would be formed at substantially equal intensity. A theoretical analysis (based on vector mathematics) suggests that this would occur at 60° relative phase. In implementation, it has been found necessary to vary the phase between approximately 40° and 160°, depending on various implementation factors, such as the frequency and power of the drive waveforms and the spacing and condition of the electrodes.

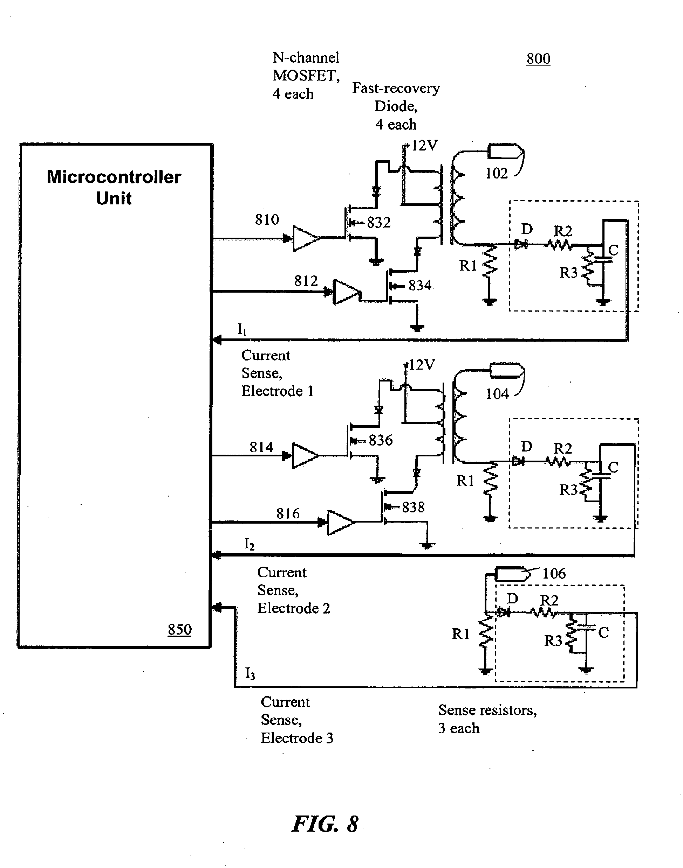

FIG. 8 is a schematic diagram of an embodiment of a circuit 800 for driving the three electrode arrangements of FIGS. 2A, 2B, 3A, and 3B. The embodiment in FIG. 8 is similar to that of FIG. 7 in terms of buffers, MOSFETs and transformers, but unlike FIG. 7, in FIG. 8 the third electrode 106 is tied to ground and does not include the buffer, MOSFET, and transformer circuitry.

In the embodiment of FIG. 8, the signals which turn the drive MOSFETs 832, 834, 836, and 838 on and off can be generated by a programmable microcontroller unit 850, and provided via buffers 810, 812, 814, and 816. As examples, the MOSFET drivers 832, 834, 836, and 838 can be MC34151 (or similar) MOSFETs and the microcontroller 850 can be a PAL18F2520 manufactured by Microchip, Inc. This circuit of this embodiment allows real-time control and adjustment of the duration and phase relationship of the drive signals. The real-time adjustments can be made with the goal of maintaining arcs 112, 114, and 116 substantially equal in intensity or to deliberately alter their relative intensity for various purposes.

In order for the microcontroller 850 to be able to sense the arc intensities, small-value resistors R1 (for example, 100 Ohm resistors) can be connected in series with the ground return of each drive signal. A voltage develops across the resistor R1 in direct proportion to the arc current delivered by the electrode 102. A sense resistor R1 is provided for each electrode. For example, a 20mA current from electrode 102 would result in a 2V signal across the 100 Ohm sense resistor R1.

The sense resistor signals are in the form of high-frequency AC voltages. It is possible to rectify and filter these signals to produce DC voltages, which are more suitable for measurement by the microcontroller unit 850.

The simple rectification/filtering networks shown include a diode D, two resistors R2 and R3, and a capacitor C, and are provided for each of the three electrodes. This network produces a voltage proportional to the arithmetic mean (i.e., average) of the absolute value of the sense resistor voltage. If greater accuracy is required, well-known means can be used to produce a voltage proportional to the quadratic mean (e.g., root-mean-square or RMS) of the sense resistor voltage. The RMS value is a better measurement of the power delivered into the arc, which may be important in some applications.

An additional improvement to the embodiment can be to make the power supply adjustable, which is shown as "12V" in FIG. 8. An adjustable "buck regulator" circuit, well-known in the art, can adjust the voltage downward from 12V to a very low voltage (e.g. 1V) or any desired intermediate voltage. This can be useful when an arc of very low power is required, as it has been found that very low pulse widths to the MOSFET's (the previous method of obtaining low power operation) can result in unstable arc operation. Alternatively, a lower input voltage and/or lower transformer step-up ratio can be used in conjunction with a boost-type regulator to provide an equivalent range of voltages.

In some embodiments, each of the 6 electrodes in FIGS. 3A and 3B can be driven by its own transformer. For instance, each heat source HS1 and HS2 could use the circuitry of FIG. 7 or 8.

In yet other embodiments, two electrodes, one from each 3 electrode heat source, can share a transformer and the other four electrodes can each have its own transformer. For example, referring to FIG. 7, each heat source HS1 and HS2 could share the third transformer for electrode 106 in each 3 electrode heat source. And electrodes 102 and 104 could have their own respective transformers.

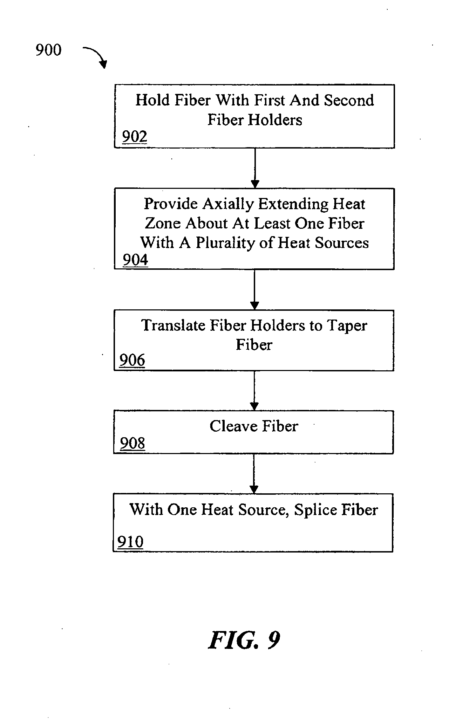

FIG. 9 provides a flow chart of an embodiment of a method processing at least one optical fiber 900, in accordance with aspects of the present invention. Method 900 can be implemented using the system 70 of FIG. 1, as an example. Step 902 includes holding respective portions of at least one fiber with first and second fiber holders. And step 904 includes providing an axially extending heat zone about at least one fiber with a plurality of heat sources arranged between the first and second fiber holders. The extended heat zone is preferably isothermic.

Tapering can be accomplished, in step 906, by selectively translating the first and second fiber holder away from each other. The method can further comprise cleaving the at least one fiber, step 908, and splicing the at least one fiber with only one of the plurality of heat sources, step 910.

It will be apparent that there are other possible arrangements of the electrodes that are within the spirit and scope of the invention. These alternative arrangements may be preferable in circumstances where it is desired to change the pattern of heating of the fiber, or where an alternative arrangement facilitates the positioning of the electrodes with respect to other equipment in a larger system.

In various embodiments, more than two stages of heat sources could be used, and each heat source does not have to be of the same type. The heat source can take the form of any known or later developed heat source. For example, the heat source can be a two electrode heat source. The heat source can include a flame. The flame can be applied directly to the fiber, or applied to a crucible that surrounds the fiber. The heat source can be a filament heat source that substantially surrounds the fiber. The filament heat source can include a Tungsten or graphite filament. The laser can be a 10 µm CO2 laser. Preferably, the heat sources provide a substantially uniform heated field about the fiber, unless there is a particular reason not to have a uniform field. Multi-electrode heat sources are narrow and highly controllable, so lend themselves to a relatively high degree of control.

The various techniques known for improving and controlling arc performance with conventional two-electrode systems can also be applied or adapted to embodiments, including pulse width modulation, ion injection, feedback control, etc. The electrodes can also be fitted with shields or focusing sleeves or other technologies intended to alter arc distribution. Known arc bending techniques utilizing dielectrics inserted near the plasma field can also be used.

The principles of the present invention could also be extended to a system of four or more electrodes, as example, but three electrodes provide a deterministic arc sequence and substantially even heating. The system could also use 2 electrode heat sources, but again, three electrode heat sources are presently preferred.

## Claims

1. A multi-stage fiber processing system comprises:
first (20) and second (22) fiber holders configured to hold respective portions of at least one fiber (10); and
a plurality of heat sources arranged between the first (20) and second (22) fiber holders and configured to provide a heat zone that axially extends about the at least one fiber (10),
**characterized in that** the plurality of heat sources includes two 3 electrode heat sources (HS1, HS2) configured to generate nine arcs, including 3 arcs generated between the 3 electrodes of each heat source (HS1, HS2), which account for 6 arcs, and 3 arcs between the two 3 electrode heat sources (HS1, HS2).

2. The system according to claim 1, wherein at least one of the 3 electrode heat sources (HS1, HS2) comprises 3 electrodes (102, 104, 106) in a "Y" configuration and/or
wherein at least one of the 3 electrode heat sources (HS1, HS2) comprises 3 electrodes (102, 104, 106) in a "T" configuration.

3. The system according to claim 1 or 2, wherein for each 3 electrode heat source (HS1, HS2), a first arc (112) is formed between a first electrode (102) and a second electrode (104), a second arc (114) is formed between the second electrode (104) and a third electrode (106), and a third arc (116) is formed between the third electrode (106) and the first electrode (102).

4. The system according to any of claims 1 to 3, wherein the two 3 electrode heat sources (HS1, HS2) are disposed in a 7.4*10⁴ to 8.1*10⁴ Pa gauge vacuum, 2.6*10⁴ to 2*10⁴ Pa absolute and/or
wherein the two 3 electrode heat sources (HS1, HS2) are disposed in an oxygen-enriched partial vacuum with plasma at a temperature of not more than about 400°C.

5. The system according to any of claims 1 to 4, wherein each of the nine arcs is independently controlled.

6. The system according to any of claims 1 to 5, wherein the system is configured to rotate the 3 arcs between the two 3 electrode heat sources (HS1, HS2) in a clockwise direction about an axis of the at least one fiber (10) or
wherein the system is configured to rotate the 3 arcs between the two 3 electrode heat sources (HS1, HS2) in a counterclockwise direction about the axis of the at least one fiber (10).

7. The system according to any of claims 1 to 6, wherein the heat zone has a temperature up to about 3000°C and/or
wherein the heat zone has a width in a range of 0mm to 10mm.

8. The system according to any of claims 1 to 7, wherein the heat zone is about 3mm.

9. The system according to any of claims 1 to 8, wherein the first fiber holder and second fiber holder are translatable away from the heat zone.

10. The system according to any of claims 1 to 9, wherein the heat zone is a substantially uniform heated plasma field and/or
wherein the heat zone is substantially isothermic.

11. The system according to any of claims 1 to 10, wherein the at least one fiber (10) is a fiber bundle and/or
wherein the at least one fiber (10) is a large diameter fiber of 400µm to 600µm.

12. The system according to any of claims 1 to 11, wherein the first and second fiber holders are configured to translate away from each other.

13. A method of fiber processing, comprising:
holding respective portions of at least one fiber with first (20) and second (22) fiber holders; and
providing an axially extending heat zone about the at least one fiber (10) with a plurality of heat sources arranged between the first (20) and second (22) fiber holders,
**characterized in that** the plurality of heat zones includes two 3 electrode heat sources (HS1, HS2) generating nine arcs, including 3 arcs generated between the 3 electrodes of each heat source (HS1, HS2), which account for 6 arcs, and 3 arcs between the two 3 electrode heat sources.

14. The method according to claim 13, further comprising:
tapering the at least one fiber (10) by selectively translating the first (20) and second (22) fiber holder away from each other.

15. The method according to claim 13 or 14, further comprising:
cleaving the at least one fiber (10); and
splicing the at least one fiber (10) with only one of the plurality of heat sources.

## Patentansprüche

1. Mehrstufiges Faserverarbeitungssystem, das umfasst:
erste (20) und zweite (22) Faserhalter, die aufgebaut sind, um jeweilige Abschnitte wenigstens einer Faser (10) zu halten; und
eine Vielzahl von Wärmequellen, die zwischen den ersten (20) und zweiten (22) Faserhaltern angeordnet sind und aufgebaut sind, um eine Wärmezone bereitzustellen, die sich axial um die wenigstens eine Faser (10) erstreckt,
**dadurch gekennzeichnet, dass** die Vielzahl von Wärmequellen zwei 3-Elektroden-Wärmequellen (HS1, HS2) umfasst, die aufgebaut sind, um neun Bogenentladungen zu erzeugen, die 3 Bogenentladungen, die zwischen den 3 Elektroden jeder Wärmequelle (HS1, HS2) erzeugt werden, was 6 Bogenentladungen ausmacht, und 3 Bogenentladungen zwischen den zwei 3-Elektroden-Wärmequellen (HS1, HS2) umfassen.

2. System nach Anspruch 1, wobei wenigstens eine der 3-Elektroden-Wärmequellen (HS1, HS3) 3 Elektroden (102, 104, 106) in einem "Y"-Aufbau umfasst, und/oder
wobei wenigstens eine der 3-Elektroden-Wärmequellen (HS1, HS2) 3 Elektroden (102, 104, 106) in einem "T"-Aufbau umfasst.

3. System nach Anspruch 1 oder 2, wobei für jede 3-Elektroden-Wärmequelle (HS1, HS2) eine erste Bogenentladung (112) zwischen einer ersten Elektrode (102) und einer zweiten Elektrode (104) ausgebildet wird, eine zweite Bogenentladung (114) zwischen der zweiten Elektrode (104) und einer dritten Elektrode (106) ausgebildet wird, und eine dritte Bogenentladung (116) zwischen der dritten Elektrode (106) und der ersten Elektrode (102) ausgebildet wird.

4. System nach einem der Ansprüche 1 bis 3, wobei die zwei 3-Elektroden-Wärmequellen (HS1, HS2) in einem Unterdruck gegenüber der Umgebung von 7,4*10⁴ bis 8,1*10⁴ Pa, 2,6*10⁴ bis 2*10⁴ Pa absolut, angeordnet sind, und/oder
wobei die 3-Elektroden-Wärmequellen (HS1, HS2) in einem sauerstoffangereicherten Teilvakuum mit Plasma bei einer Temperatur von nicht mehr als etwa 400°C angeordnet sind.

5. System nach einem der Ansprüche 1 bis 4, wobei jede der neun Bogenentladungen unabhängig gesteuert wird.

6. System nach einem der Ansprüche 1 bis 5, wobei das System aufgebaut ist, um die 3 Bogenentladungen zwischen den zwei 3-Elektroden-Wärmequellen (HS1, HS2) in einer Uhrzeigerrichtung um eine Achse der wenigstens einen Faser (10) zu drehen, oder
wobei das System aufgebaut ist, um die 3 Bogenentladungen zwischen den zwei 3-Elektroden-Wärmequellen (HS1, HS2) in einer Gegenuhrzeigerrichtung um die Achse der wenigstens einen Faser (10) zu drehen.

7. System nach einem der Ansprüche 1 bis 6, wobei die Wärmezone eine Temperatur von bis zu etwa 3000°C hat, und/oder
wobei die Wärmezone eine Breite in einem Bereich von 0 mm bis 10 mm hat.

8. System nach einem der Ansprüche 1 bis 7, wobei die Wärmezone etwa 3 mm hat.

9. System nach einem der Ansprüche 1 bis 8, wobei der erste Faserhalter und der zweite Faserhalter von der Wärmezone weg versetzbar sind.

10. System nach einem der Ansprüche 1 bis 9, wobei die Wärmezone ein im Wesentlichen gleichmäßiges geheiztes Plasmafeld ist, und/oder
wobei die Wärmezone im Wesentlichen isotherm ist.

11. System nach einem der Ansprüche 1 bis 10, wobei die wenigstens eine Faser (10) ein Faserbündel ist, und/oder
wobei die wenigstens eine Faser (10) eine Faser mit großem Durchmesser von 400 µm bis 600 µm ist.

12. System nach jedem der Ansprüche 1 bis 11, wobei die ersten und zweiten Faserhalter aufgebaut sind, um voneinander weg verschoben zu werden.

13. Faserverarbeitungsverfahren, das umfasst:
Halten jeweiliger Abschnitte wenigstens einer Faser mit ersten (20) und zweiten (22) Faserhaltern; und
Bereitstellen einer sich axial erstreckenden Wärmezone um die wenigstens eine Faser (10) mit einer Vielzahl von Wärmequellen, die zwischen den ersten (20) und zweiten (22) Faserhaltern angeordnet sind,
**dadurch gekennzeichnet, dass** die Vielzahl von Wärmezonen zwei 3-Elektroden-Wärmequellen (HS1, HS2) umfasst, die neun Bogenentladungen erzeugen, die 3 Bogenentladungen, die zwischen den 3 Elektroden jeder Wärmequelle (HS1, HS2) erzeugt werden, was 6 Bogenentladungen ausmacht, und 3 Bogenentladungen zwischen den zwei 3-Elektroden-Wärmequellen (HS1, HS2) umfassen.

14. Verfahren nach Anspruch 13, das ferner umfasst:
Anschrägen der wenigstens einen Faser (10) durch selektives Versetzen der ersten (20) und zweiten (22) Faserhalter voneinander weg.

15. Verfahren nach Anspruch 13 oder 14, das ferner umfasst:
Teilen der wenigstens einen Faser (10); und
Zusammenfügen der wenigstens einen Faser (10) mit nur einer der Vielzahl von Wärmequellen.

## Revendications

1. Système de traitement de fibres à étages multiples comprenant :
des premier (20) et second (22) supports de fibres configurés pour maintenir des portions respectives d'au moins une fibre (10) ; et
une pluralité de sources de chaleur agencées entre les premier (20) et second (22) supports de fibres et configurées pour fournir une zone de chaleur qui s'étend axialement autour de l'au moins une fibre (10),
**caractérisé en ce que** la pluralité de sources de chaleur inclut deux sources de chaleur à 3 électrodes (HS1, HS2) configurées pour générer neuf arcs, y compris 3 arcs générés entre les 3 électrodes de chaque source de chaleur (HS1, HS2), qui représentent 6 arcs, et 3 arcs entre les deux sources de chaleur à 3 électrodes (HS1, HS2).

2. Système selon la revendication 1, dans lequel au moins une des sources de chaleur à 3 électrodes (HS1, HS2) comprend 3 électrodes (102, 104, 106) dans une configuration en « Y » et/ou
dans lequel au moins une des sources de chaleur à 3 électrodes (HS1, HS2) comprend 3 électrodes (102, 104, 106) dans une configuration en « T ».

3. Système selon la revendication 1 ou 2, dans lequel pour chaque source de chaleur à 3 électrodes (HS1, HS2), un premier arc (112) est formé entre une première électrode (102) et une deuxième électrode (104), un deuxième arc (114) est formé entre la deuxième électrode (104) et une troisième électrode (106), et un troisième arc (116) est formé entre la troisième électrode (106) et la première électrode (102).

4. Système selon l'une quelconque des revendications 1 à 3, dans lequel les deux sources de chaleur à 3 électrodes (HS1, HS2) sont disposées dans un vide de manomètre de 7,4*10⁴ à 8,1*10⁴ Pa, 2,6*10⁴ à 2*10⁴ Pa absolu et/ou dans lequel les deux sources de chaleur à 3 électrodes (HS1, HS2) sont disposées dans un vide partiel enrichi en oxygène avec du plasma à une température ne dépassant pas environ 400°C.

5. Système selon l'une quelconque des revendications 1 à 4, dans lequel chacun des neuf arcs est commandé indépendamment.

6. Système selon l'une quelconque des revendications 1 à 5, dans lequel le système est configuré pour faire tourner les 3 arcs entre les deux sources de chaleur à 3 électrodes (HS1, HS2) dans le sens des aiguilles d'une montre autour d'un axe de l'au moins une fibre (10) ou
dans lequel le système est configuré pour faire tourner les 3 arcs entre les deux sources de chaleur à 3 électrodes (HS1, HS2) dans le sens contraire des aiguilles d'une montre autour d'un axe de l'au moins une fibre (10).

7. Système selon l'une quelconque des revendications 1 à 6, dans lequel la zone de chaleur a une température allant jusqu'à environ 3000°C et/ou dans lequel la zone de chaleur a une largeur dans la plage de 0 mm à 10 mm.

8. Système selon l'une quelconque des revendications 1 à 7, dans lequel la zone de chaleur est d'environ 3 mm.

9. Système selon l'une quelconque des revendications 1 à 8, dans lequel les premier support de fibres et second support de fibres peuvent subir une translation à l'écart de la zone de chaleur.

10. Système selon l'une quelconque des revendications 1 à 9, dans lequel la zone de chaleur est un champ de plasma chauffé essentiellement uniforme et/ou dans lequel la zone de chaleur est essentiellement isotherme.

11. Système selon l'une quelconque des revendications 1 à 10, dans lequel l'au moins une fibre (10) est un faisceau de fibres et/ou
dans lequel l'au moins une fibre (10) est une fibre de grand diamètre de 400 µm à 600 µm.

12. Système selon l'une quelconque des revendications 1 à 11, dans lequel les premier et second supports de fibres sont configurés pour subir une translation à l'écart l'un de l'autre.

13. Procédé de traitement de fibres, comprenant :
maintenir des portions respectives d'au moins une fibre avec des premier (20) et second (22) supports de fibres ; et
pourvoir une zone de chaleur s'étendant axialement autour de l'au moins une fibre (10) d'une pluralité de sources de chaleur agencées entre les premier (20) et second (22) supports de fibres,
**caractérisé en ce que** la pluralité de sources de chaleur inclut deux sources de chaleur à 3 électrodes (HS1, HS2) générant neuf arcs, y compris 3 arcs générés entre les 3 électrodes de chaque source de chaleur (HS1, HS2), qui représentent 6 arcs, et 3 arcs entre les deux sources de chaleur à 3 électrodes.

14. Procédé selon la revendication 13, comprenant en outre :
effiler l'au moins une fibre (10) en faisant subir une translation sélective aux premier (20) et second (22) supports de fibres à l'écart l'un de l'autre.

15. Procédé selon la revendication 13 ou 14, comprenant en outre :
cliver l'au moins une fibre (10) ; et
épisser l'au moins une fibre (10) avec seulement une de la pluralité de sources de chaleur.
